# EUROPÄISCHE PATENTSCHRIFT

(11) **EP 3 794 949 B1**
(45) Veröffentlichungstag und Bekanntmachung des Hinweises auf die Patenterteilung: **29.04.2026**
(21) Anmeldenummer: 19198931.8
(22) Anmeldetag: 23.09.2019
(51) Int. Cl.: A23C 9/144, A23C 7/04, A23C 21/00, A23C 9/14, B01D 61/00, B01D 61/02, B01D 61/42, B01D 61/58, C12P 7/56, B01D 61/44, A23C 9/142

(54) **VERFAHREN ZUR GEKOPPELTEN HERSTELLUNG VON SÜSSMOLKE UND MILCHSÄURE AUS SAUERMOLKE**
PROCESS FOR THE COUPLED PRODUCTION OF SWEET WHEY AND LACTIC ACID FROM ACID WHEY
PROCÉDÉ DE PRODUCTION COUPLÉE DE LACTOSÉRUM DOUX ET D'ACIDE LACTIQUE À PARTIR DE LACTOSÉRUM ACIDE

(43) Veröffentlichungstag der Anmeldung: 24.03.2021
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- WO-A1-95/33696
- MD-Z- 974
- US-A- 4 855 056

## Beschreibung

### GEBIET DER ERFINDUNG

Die Erfindung befindet sich auf dem Gebiet der Milchindustrie und betrifft ein Verfahren zur gekoppelten Herstellung von Süßmolke und Milchsäure aus Sauermolke.

### HINTERGRUND DER ERFINDUNG

Molke ist die wässrige grünlich-gelbe Restflüssigkeit, die bei der Käseherstellung entsteht. Sie ist der flüssige Teil, der nach der Gerinnung der Milch zu Käse oder Quark abgesondert werden kann. Es gibt zwei Sorten von Molke: die *Süßmolke* (auch *Labmolke),* die entsteht, wenn man Milch mit Lab zur Käseherstellung dicklegt, und die *Sauermolke,* die entsteht, wenn Milch durch Milchsäurebakterien fermentiert wird.

Molke besteht zu 94 % aus Wasser, zu 4 bis 5 % aus Milchzucker und ist nahezu fettfrei. Außerdem enthält sie Milchsäure, die Vitamine B₁, B₂ (dies bewirkt die grünliche Farbe) und B₆ sowie Kalium, Calcium, Phosphor und andere Mineralstoffe, doch vor allem 0,4 bis 1 % Molkenprotein. Molke enthält deutlich weniger Eiweiß als Milch. Insbesondere enthält sie anders als Milch kein Kasein. In Milch ist das Kasein hingegen das Haupteiweiß. Süßmolke hat einen pH-Wert von 5,6 oder mehr, Sauermolke 5,1 oder weniger.

Während Molke und speziell Süßmolke wertvolle Milchprodukte darstellen, für die es vielfältige Anwendungen gibt, stellt Sauermolke wegen des hohen Milchsäure- und Mineralienanteils ein Abfallprodukt dar, das allenfalls noch für den Tierfutterbereich geeignet ist.

Es hat verschiedene Ansätze gegeben, Sauermolke zu entsäuern, jedoch haben sich entsprechende Trennverfahren bislang als entweder zu aufwendig oder zu unvollständig erwiesen.

### RELEVANTER STAND DER TECHNIK

Aus der US 3,615,663 A (ALFA LAVAL) ist ein Verfahren zur Herstellung von nichthygroskopischem Sauermolkepulver bekannt, bei dem man die Sauermolke zunächst pasteurisiert, auf eine Trockenmasse von 35 bis 52 Gew.-% eindampft, das Konzentrat abkühlt bis es zur Abscheidung von kristallen kommt und das Produkt schließlich sprühtrocknet.

Ein analoges Verfahren ist auch GB 2293825 B2 (WATERFORD) bekannt.

Gegenstand der US 2015 150275 A1 (US AGRICULTURE) ist ein Verfahren zur Verarbeitung von Sauermolke, umfassend das Behandeln der Sauermolkenlösung mit alpha-Galactosidase und/oder beta-Galactosidase bei einem pH-Wert von etwa 3,2 bis etwa 5.2 für etwa 20 Minuten bis etwa 16 Stunden bei etwa 20 Grad Celsius bis etwa 60 Grad Celsius, um eine saure Molkelösung herzustellen, die mindestens etwa 40 Prozent weniger Laktose als die ursprüngliche saure Molkelösung enthält, und Filtrieren der sauren Molkelösung. Das dabei anfallende Retentat ist mit Proteinen angereichert, im Permeat findet sich im Wesentlichen die Lactose, die daraus abgetrennt werden kann. Das Retentat kann anschließend sprühgetrocknet und texturiert werden.

Gegenstand der EP 0712381 B1 (FRAUNHOFER) ist ein Verfahren zum Reinigen von Molkereiabwasser durch anaerobe Stoffumwandlung und Abtrennung der entstehenden Reaktionsprodukte, umfassend die folgenden Schritte: (a) Vorbehandeln des Abwassers mit Base, (b) Einführen des vorbehandelten Abwassers in einen Fermenter, anaerobes Fermentieren der im Abwasser vorhandenen Lactose zu Milchsäure und Nachreinigen der im Fermenter gebildeten Fermentationsbrühe; (c) Abkonzentrieren des Lactats im Abwasser und Aufkonzentrieren von Milchsäure und Base mit Hilfe bipolarer Elektrodialyse Die Schrift hat keinen Bezug zu Molke.

In der EP 1320410 B1 (ELECTROSYNTHESIS) wird ein Bipolarmembran-Elektrodialyse-Verfahren zur Salzspaltung mehrwertiger Metallsalze vorgeschlagen, bei dem das Metallkation in Gegenwart von Hydroxylionen im Wesentlichen unlösliche Niederschläge bildet. Die Einführung einer Säure in die Kammer, in der sich Metallhydroxide bilden würden, hemmt ihre Entwicklung oder neutralisiert gebildete Feststoffe, so dass die Salzspaltung fortgesetzt werden kann. Das Verfahren wird zur Herstellung konzentrierter und gereinigter Säuren, wie 2-Keto-L-Gluconsäure, H (KLG), ein Schlüsselzwischenprodukt bei der Herstellung von Ascorbinsäure, angewendet.

Aus der EP 2598468 B1 (PFEIFER UND LANGEN) ist ein Verfahren zur Rückgewinnung eines in einem Fermentationsprozess zur Herstellung eines Produktes eingesetzten Hilfsstoffs, der einer Fermentationsbrühe zugesetzt worden ist und aus dem mittels einer chemischen Reaktion in der Fermentationsbrühe eine andere Substanz entsteht, bekannt, wobei die folgenden Schritte durchlaufen werden: die Fermentationsbrühe wird einem ersten Verfahrensschritt unterzogen, in dem der in dem Fermentationsprozess eingesetzte Hilfsstoff, ein saurer Ionenaustauscher, eine Minerallauge oder Mineralsäure ist, ausgewählt aus der Gruppe bestehend aus Natronlauge, Ammoniak, Kalilauge, Salzsäure, Schwefelsäure, oder Phosphorsäure, und die entstehende andere Substanz ausgewählt ist aus der Gruppe bestehend aus Natrium-, Kalium,- Ammoniumchlorid, Natrium-, Kalium, Ammoniumphosphat, Natrium-, Kalium,- Ammoniumsulfat und/oder zumindest teilweise erschöpften sauren Ionenaustauschern mittels mindestens einem chromatographischen Verfahren in eine Fraktion A von dem mindestens einen in dem Fermentationsprozess anfallenden Produkt getrennt wird und letzteres in einer Fraktion B anfällt, die Fraktion A in einem zweiten Verfahrensschritt einer bipolaren Elektrodialyse unterworfen wird, um aus in der Fraktion A enthaltenen aus dem Hilfsstoff entstandene andere Substanz, wie Salzen, den Hilfsstoff, wie die zu den Salzen korrespondierenden Säuren/Laugen, zu generieren.

In der US 4,855,056 A (HARJU) wird ein Verfahren zur Gewinnung von entmineralisierter Sauermolke beschrieben, bei dem nicht nur Molke, sondern auch Kationen und Anionen zurückgewonnen werden.

### AUFGABE DER ERFINDUNG

Eine erste Aufgabe der vorliegenden Erfindung hat daher darin bestanden, ein Verfahren bereitzustellen, mit dessen Hilfe man Sauermolke entsäuern kann, um auf diesem Wege Süßmolke zu erhalten.

Eine zweite Aufgabe ist darin zu sehen, eine Süßmolke mit verbesserten sensorischen Eigenschaften, speziell einem verminderten mineralischen Beigeschmack und gleichzeitig gesteigerter Süße zur Verfügung zu stellen.

Schließlich sollte das neue Verfahren es auch ermöglichen, die anfallenden Seitenströme zu nutzen, d.h. vor allem Milchsäure und daneben auch Mineralien in möglichst hoher Reinheit zu gewinnen.

### BESCHREIBUNG DER ERFINDUNG

Die Erfindung betrifft ein Verfahren zur gekoppelten Gewinnung von Süßmolke und Milchsäure aus Sauermolke, umfassend oder bestehend aus den folgenden Schritten:

Kontinuierliches Verfahren zur gekoppelten Gewinnung von Süßmolke und Milchsäure aus Sauermolke, umfassend oder bestehend aus den folgenden Schritten:
(a) Bereitstellung von Sauermolke;
(b) Bereitstellen von Wasser als Spüllösung;
(c) Bereitstellung einer Elektrodialyse-Vorrichtung, die mindestens drei nebeneinander angeordnete und über semipermeable Membranen verbundene Zellen verfügt;
(d) Aufgeben der Sauermolke auf die mittlere Zelle;
(e) Aufgeben der Spüllösung auf die beiden Zellen, die die mittlere Zelle flankieren;
(f) Elektrodialyse der in der mittleren Zelle befindlichen Sauermolke unter Erhalt eines entsäuerten Diluats;
(g) Bereitstellen einer Umkehrosmosezelle;
(h) Aufgeben der Spüllösung auf die Umkehrosmosezelle unter Erhalt eines Retentats und eines Permeats;
(i) Rückführung des Permeats in die Dialysezelle;
(j) Bereitstellen einer bipolaren Elektrodialysezelle; sowie
(k) Aufgeben des Retentats auf die bipolare Elektrodialysezelle unter Erhalt eines Diluats, welches die Milchsäure enthält und salzreicher Fraktionen, die zum Konzentrat vereinigt werden, welches die Mineralien enthält.

Überraschenderweise wurde gefunden, dass auf die oben beschriebene Weise Sauermolke in eine Süßmolke überführt werden kann, die sich gegenüber einem konventionellen Vergleichsprodukt auch noch dadurch auszeichnet, dass sie über eine verbesserte geschmackliche Qualität verfügt, nämlich mehr Süße aufweist und keinen mineralischen, metallischen Beigeschmack.

Die Spüllösung wird dabei im Kreis geführt und beim Verlassen des Elektrodialyse-Systems vereint bzw. gemischt um einen Ladungsausgleich sicher zu stellen. Weiterhin ist es von Vorteil, die Konzentration in der Spüllösung möglichst niedrig zu halten, damit die treibende Kraft nicht gegen eine hohe Ladungskonzentration in der Spüllösung agieren muss. Vorzugsweise wird die Spüllösung nach dem kontinuierlichen Ausschleusen mittels Umkehrosmose oder bipolare Elektrodialyse aufkonzentriert und das Permeat in den Kreislauf zurückgeführt, während aus dem Retentat bzw. Diluat die Milchsäure beispielsweise durch Eindampfen gewonnen werden kann.

### Sauermolke

Unter Sauermolke versteht man den flüssigen Bestandteil, der bei der Säuerung von Rohmilch oder Magermilch mit Milchsäurebakterien anfällt. Wird pasteurisierte Milch für die Säuerung eingesetzt, kann auf eine nachträgliche Pasteurisierung der Sauermolke verzichtet werden. Ist der Gewinnung der Sauermolke kein Pasteurisierungsschritt vorgelagert, wird die Sauermolke vor der Weiterverarbeitung pasteurisiert. Dazu lässt man die Sauermolke üblicherweise einen Wärmetauscher passieren, an dem ein Temperaturgradient anliegt, wobei das Produkt für eine Verweilzeit von mindestens 15 und höchstens 60 Sekunden, vorzugsweise etwa 30 Sekunden auf eine Temperatur von etwa 70 bis 80 °C und insbesondere etwa 72 bis 74 °C erhitzt wird.

### Vorbehandlung; Eindampfen oder Ultra- bzw. Nanofiltration

Vor der Elektrodialyse kann die Sauermolke vorbehandelt werden, wobei eine Alternative darin besteht, die Trockenmasse durch Eindampfen zu erhöhen, beispielsweise auf einen Gehalt von etwa 15 bis etwa 30 Gew. Hierzu wird die Sauermolke beispielsweise in Fallfilmverdampfern entwässert.

In der zweiten Variante kann die Sauermolke alternativ einer Ultra- bzw. vorzugsweise einer Nanofiltration unterworfen werden. Mit Hilfe der Nanofiltration wird bereits ein Teil des vorhandenen Lactats sowie der Mineralsalze abgetrennt, ohne dass dabei der Anteil an wertvoller Lactose abgereichert wird.

Ultra- und Nanofiltration sind Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch *"Cut-off"*) bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h ).

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Die Nanofiltration bevorzugt Porendurchmesser im Bereich von 100 bis 5.000 und vorzugsweise etwa 500 bis 2.000 Dalton.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Sowohl Ultra- als auch Nanofiltration können im Sinne der vorliegenden Erfindung "heiß" oder "kalt", d.h. im Temperaturbereich von etwa 10 bis etwa 60 °C durchgeführt werden. Bevorzugt ist es jedoch, bei Temperaturen im niedrigen Bereich von etwa 10 bis etwa 20 °C zu arbeiten.

Es hat sich weiterhin als vorteilhaft erwiesen, in die Vorbehandlung einen Schritt aufzunehmen, bei dem die Sauermolke vor der Elektrodialyse über einen Kationenaustauscher, vorzugsweise einen schwach sauren Kationenaustauscher geleitet wird. Dies hat den Vorteil, dass bereits ein wesentlicher Teil der zweiwertigen Salze abgetrennt wird, die ansonsten von der Elektrolyse erst dann erfasst würden, wenn die einwertigen Salze entfernt worden sind.

Selbstverständlich ist es möglich, Eindampfen und Filtration miteinander zu verknüpfen, insbesondere die Sauermolke zunächst einzudampfen und dann zu filtrieren oder umgekehrt.

### Elektrodialyse

Hierbei handelt es sich um einen durch Anlegen eines elektrischen Feldes getriebenen Membranprozess, in dem Ionenaustauschermembranen in Kombination mit einer elektrischen Potentialdifferenz benutzt werden, um ionische Spezies von ungeladenen Lösungsmitteln oder Verunreinigungen durch Passieren von selektiven Membranen abzutrennen. Das nachfolgende Schema verdeutlicht den Prozess; dabei steht AM für Anionaustauschermembran und CM für Kationaustauschermembran:

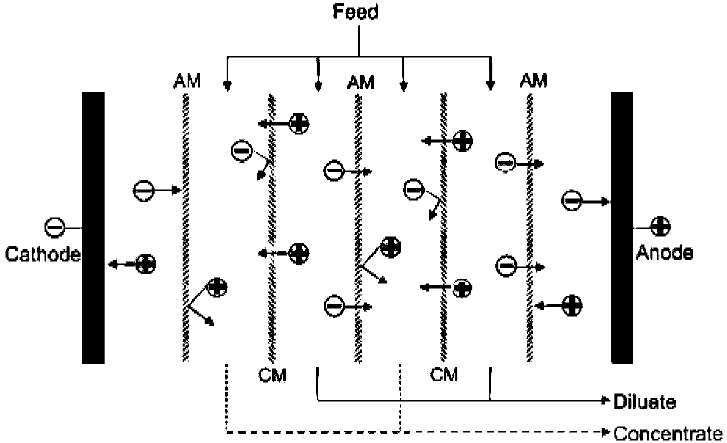

Dazu wird in einem Elektrodialyse-Separator der Raum zwischen zwei Elektroden durch einen Stapel aus einander abwechselnden Anionen- und Kationenaustauschermembranen getrennt. Jedes Paar Ionenaustauschermembranen bildet eine separate "Zelle". In technischen Systemen bestehen diese Stapel aus mehr als zweihundert Membranpaaren. Wird eine elektrische Gleichspannung an die Elektroden angelegt, so wandern die Anionen zur Anode. Die Anionen können einfach die positiv geladenen Anionenaustauschermembranen passieren, aber sie werden jeweils an der nächstgelegenen negativ geladenen Kationenaustauschermembran gestoppt. Weil dasselbe (natürlich mit umgekehrten Vorzeichen) auch mit den Kationen geschieht, besteht der Nettoeffekt der Elektrodialyse in einer Anreicherung der Salze in den Zellen mit ungerader Nummer (Anionentauschermembran/Kationenaustauschermembran), während die Zellen mit gerader Nummer (Kationenaustauschermembran/Anionentauschermembran) an Salz verarmen. Die Lösungen mit erhöhter Salzkonzentration werden zum Konzentrat vereint, während die salzarmen Lösungen das Diluat bilden.

Auf diese Weise wird die Sauermolke nicht nur von ihrem Anteil an Milchsäure befreit, auch die Mineralien wandern in die Spülflüssigkeit, die im Kreis gefahren wird und sich dabei nach und nach mit Milchsäure und Mineralien anreichert, während aus der mittleren Zelle ein Diluat erhalten wird, das seiner Zusammensetzung nach einer mineralfreien bzw. mineralarmen Süßmolke entspricht.

Das Verfahren wird dabei kontinuierlich durchgeführt.

### Milchsäurerückgewinnung

In einer weiterhin bevorzugten Ausführungsform wird das Verfahren unterbrochen, sobald die Spülflüssigkeit einen so hohen Gehalt an Milchsäure aufweist, so dass sich eine Rückgewinnung betriebswirtschaftlich loht; dieser Grenzgehalt kann daher variieren.

Zur Rückgewinnung kann dann entweder die gesamte Spülflüssigkeit oder aber auch nur ein Teil ausgeschleust werden, wobei die fehlende Menge dann durch Frischwasser ergänzt wird. Gegebenenfalls kann auch dieser Vorgang kontinuierlich durchgeführt werden, d.h. während Konzentrat ausgeschleust wird, wird gleichzeitig eine entsprechende Menge Frischwasser nachdosiert.

### Umkehrosmose

Die Aufarbeitung des Konzentrats erfolgt erfindungsgemäß durch eine Umkehrosmose. Die Umkehrosmose oder Reversosmose ist ein physikalisches Membranverfahren zur Konzentrierung von in Flüssigkeiten gelösten Stoffen, bei der mit Druck der natürliche Osmose-Prozess umgekehrt wird.

Das Verfahrensprinzip besteht darin, dass das Medium, in dem die Konzentration eines bestimmten Stoffes verringert werden soll, durch eine halbdurchlässige (semipermeable) Membran von dem Medium getrennt ist, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Typische Drücke für die Umkehrosmose liegen im Bereich von 3 bis 30 bar (Trinkwasserentsalzunq) oder bis zu 8o bar (Meerwasserentsalzung).

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die "Verunreinigungsmoleküle" zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren, wie dies durch das Lösungs-Diffusions-Modell beschrieben wird: Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen.

Es wird dabei ein Milchsäurekonzentrat gewonnen, das außer einem geringen Teil an Mineralien keine Verunreinigungen enthält und beispielsweise für die Polymerisation besonders geeignet ist. Das Permeat dient als Spülflüssigkeit und wird in den Prozess zurückgeführt.

### Bipolare Elektrodialyse

Im Anschluss werden Milchsäure und Mineralien durch bipolare Elektrodialyse aus dem Retentat der Umkehrosmose gewonnen.

Die bipolare Elektrodialyse stellt ein bekanntes Trennverfahren dar. Hierbei handelt es sich um einen elektrochemisch getriebenen Membranprozess, in dem Ionenaustauschermembranen in Kombination mit einer elektrischen Potentialdifferenz benutzt werden, um ionische Spezies von ungeladenen Lösungsmitteln oder Verunreinigungen abzutrennen.

Dazu wird in einem Elektrodialyse-Separator der Raum zwischen zwei Elektroden durch einen Stapel aus einander abwechselnden Anionen- und Kationenaustauschermembranen getrennt. Jedes Paar Ionenaustauschermembranen bildet eine separate "Zelle". In technischen Systemen bestehen diese Stapel aus mehr als zweihundert Membranpaaren. Wird eine elektrische Gleichspannung an die Elektroden angelegt, so wandern die Anionen zur Anode. Die Anionen können einfach die positiv geladenen Anionenaustauschermembranen passieren, aber sie werden jeweils an der nächstgelegenen negativ geladenen Kationenaustauschermembran gestoppt. Weil dasselbe (natürlich mit umgekehrten Vorzeichen) auch mit den Kationen geschieht, besteht der Nettoeffekt der Elektrodialyse in einer Anreicherung der Salze in den Zellen mit ungerader Nummer (Anionentauschermembran/Kationenaustauschermembran), während die Zellen mit gerader Nummer (Kationenaustauschermembran/Anionentauschermembran) an Salz verarmen.

Die Lösungen mit erhöhter Salzkonzentration werden zum Konzentrat vereint, aus welchem die Mineralien gewonnen werden, während die salzarmen Lösungen das die Milchsäure enthaltende Diluat bilden. Die wässrigen Fraktionen können anschließend getrocknet werden, beispielsweise durch Verdampfen oder Sprüh- oder Gefriertrocknung.

### BEISPIELE

### BEISPIEL 1

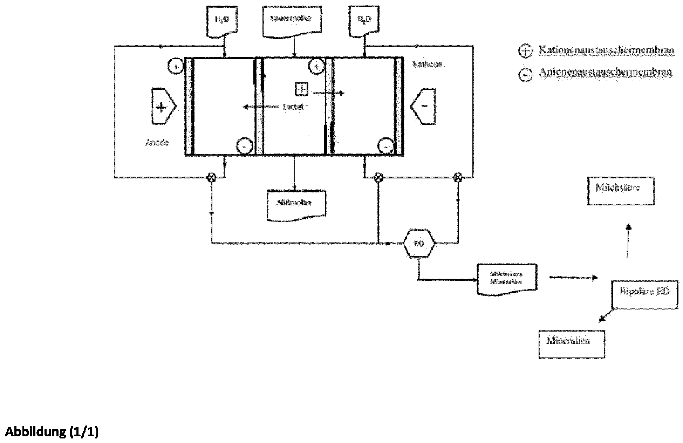

Eine Elektrodialyseeinheit gemäß **Abbildung 1** wurde kontinuierlich mit einem Durchsatz von 100 L/h Sauermolke (0,7 Gew.-% Milchsäure, 0,8 Gew.-% Mineralien, pH-Wert: 4,5) beschickt. Die beiden angrenzenden Zellen wurden mit Frischwasser im Kreislauf bei gleichem Durchsatz betrieben. Das Diluat wurde kontinuierlich abgenommen. Es wurde eine Süßmolke erhalten, die praktisch frei von Milchsäure und Mineralien war und einen pH-Wert von 5,9 aufwies.

Nach einer Betriebsdauer von 10 Stunden hatte die Milchsäurekonzentration im Spülwasser einen Wert von 1,8 Gew.-% erreicht. Das Spülwasser aus beiden Zellen wurde kontinuierlich abgelassen und gleichzeitig gegen eine gleiche Menge Frischwasser ersetzt. Die beiden Spülwassermengen wurden vereinigt und bei 20 °C auf eine Umkehrosmoseeinheit (Konzentrierungsfaktor 10) gegeben. Das dabei anfallende Permeat wurde in den Spülmittelkreislauf der Dialyseeinheit zurückgeführt, das Retentat hingegen auf eine bipolare Elektrodialyseeinheit gegeben. Die dabei anfallenden salzhaltigen und salzarmen Fraktionen wurden jeweils vereinigt und anschließend entwässert. Dabei wurde Milchsäure in einer Reinheit von 97,4 % und ein Mineralienkonzentrat erhalten, welches überwiegend aus Natriumchlorid bestand.

### BEISPIEL 2

### Geschmackliche Beurteilung

Die erfindungsgemäß erhaltene Süßmolke gemäß Beispiel 1 wurde gegen eine konventionelle Süßmolke aus der Lab-Käseproduktion von einem Panel bestehend aus 5 erfahrenen Testern verkostet und auf einer Skala von (1) = gering vorhanden bis (5) = deutlich ausgeprägt bewertet. Die Ergebnisse finden sich in **Tabelle 1:**

**Tabelle 1**

| Verkostung von Süßmolke | | |
|---|---|---|
| | **Erfindungsgemäße Süßmolke** | **Standard-Süßmolke** |
| Süße | 4,5 | 3,0 |
| Mineralischer Beigeschmack | 2,0 | 3,5 |

Die erfindungsgemäße Süßmolke zeichnete sich durch höhere Süße und geringeren mineralischen Beigeschmack aus.

## Patentansprüche

1. Kontinuierliches Verfahren zur gekoppelten Gewinnung von Süßmolke und Milchsäure aus Sauermolke, umfassend oder bestehend aus den folgenden Schritten:
(a) Bereitstellung von Sauermolke;
(b) Bereitstellen von Wasser als Spüllösung;
(c) Bereitstellung einer Elektrodialyse-Vorrichtung, die mindestens drei nebeneinander angeordnete und über semipermeable Membranen verbundene Zellen verfügt;
(d) Aufgeben der Sauermolke auf die mittlere Zelle;
(e) Aufgeben der Spüllösung auf die beiden Zellen, die die mittlere Zelle flankieren;
(f) Elektrodialyse der in der mittleren Zelle befindlichen Sauermolke unter Erhalt eines entsäuerten Diluats;
(g) Bereitstellen einer Umkehrosmosezelle;
(h) Aufgeben der Spüllösung auf die Umkehrosmosezelle unter Erhalt eines Retentats und eines Permeats;
(i) Rückführung des Permeats in die Dialysezelle;
(j) Bereitstellen einer bipolaren Elektrodialysezelle; sowie
(k) Aufgeben des Retentats auf die bipolare Elektrodialysezelle unter Erhalt eines Diluats, welches die Milchsäure enthält und salzreicher Fraktionen, die zum Konzentrat vereinigt werden, welches die Mineralien enthält.

2. Verfahren nach Anspruch 1, **dadurch gekennzeichnet, dass** man die Sauermolke vor der Elektrodialyse durch Eindampfen aufkonzentriert.

3. Verfahren nach mindestens einem der Ansprüche 1 bis 2, **dadurch gekennzeichnet, dass** man die Sauermolke vor der Elektrodialyse einer Ultra- oder Nanofiltration unterwirft.

4. Verfahren nach mindestens einem der Ansprüche 1 bis 3, **dadurch gekennzeichnet, dass** man die Sauermolke vor der Elektrodialyse über einen Kationenaustauscher leitet.

5. Verfahren nach mindestens einem der Ansprüche 1 bis 4, **dadurch gekennzeichnet, dass** man das Diluat sowie das Konzentrat der bipolaren Elektrodialyse anschließend entwässert.

## Claims

1. Continuous process for the coupled production of sweet whey and lactic acid from sour whey, comprising or consisting of the following steps:
(a) providing acid whey;
(b) providing water as a rinsing solution;
(c) providing an electrodialysis apparatus having at least three cells arranged side by side and connected by semipermeable membranes;
(d) feeding the acid whey to the middle cell;
(e) feeding the flush solution to the two cells flanking the middle cell;
(f) electro-dialysing the acid whey in the middle cell to obtain a deacidified diluate;
(g) providing a reverse osmosis cell;
(h) applying the flush solution to the reverse osmosis cell to obtain a retentate and a permeate;
(i) returning the permeate to the dialysis cell;
(j) providing a bipolar electrodialysis cell; and
(k) feeding the retentate to the bipolar electrodialysis cell to obtain a diluate containing the lactic acid and salt-rich fractions, which are combined to form the concentrate containing the minerals.

2. Process according to claim 1, **characterised in that** the acid whey is concentrated by evaporation prior to electrodialysis.

3. Process according to at least one of claims 1 to 2, **characterised in that** the acid whey is subjected to ultra- or nanofiltration prior to electrodialysis.

4. Process according to at least one of claims 1 to 3, **characterised in that** the acid whey is passed over a cation exchanger before electrodialysis.

5. Process according to at least one of claims 1 to 4, **characterised in that** the diluate and the concentrate from the bipolar electrodialysis are subsequently dewatered.

## Revendications

1. Procédé continu pour la production couplée de lactosérum doux et d'acide lactique à partir de lactosérum acide, comprenant ou consistant en les étapes suivantes :
(a) fournir du lactosérum acide ;
(b) fournir de l'eau comme solution de rinçage ;
(c) fournir un appareil d'électrodialyse comportant au moins trois cellules disposées côte à côte et reliées par des membranes semi-perméables ;
(d) alimenter la cellule centrale en lactosérum acide ;
(e) alimenter les deux cellules flanquant la cellule centrale en solution de rinçage ;
(f) électrodialyse de le lactosérum acide dans la cellule centrale pour obtenir un diluate désacidifié ;
(g) fournir une cellule d'osmose inverse ;
(h) appliquer la solution de rinçage à la cellule d'osmose inverse pour obtenir un rétentat et un perméat ;
(i) renvoyer le perméat vers la cellule de dialyse ;
(j) fournir une cellule d'électrodialyse bipolaire ; et
(k) alimenter la cellule d'électrodialyse bipolaire avec le rétentat afin d'obtenir un diluate contenant les fractions riches en acide lactique et en sel, qui sont combinées pour former le concentré contenant les minéraux.

2. Procédé selon la revendication 1, **caractérisé en ce que** le lactosérum acide est concentré par évaporation avant l'électrodialyse.

3. Procédé selon au moins l'une des revendications 1 à 2, **caractérisé en ce que** le lactosérum acide est soumis à une ultra- ou nanofiltration avant l'électrodialyse.

4. Procédé selon au moins l'une des revendications 1 à 3, **caractérisé en ce que** le lactosérum acide est passé sur un échangeur cationique avant l'électrodialyse.

5. Procédé selon au moins l'une des revendications 1 à 4, **caractérisé en ce que** le diluate et le concentré issus de l'électrodialyse bipolaire sont ensuite déshydratés.
